# EUROPÄISCHE PATENTSCHRIFT

(11) **EP 0 732 411 B1**
(45) Veröffentlichungstag und Bekanntmachung des Hinweises auf die Patenterteilung: **03.05.2000**
(21) Anmeldenummer: 96103857.7
(22) Anmeldetag: 12.03.1996
(51) Int. Cl.: C21C 5/42, C21C 5/52

(54) **Schmelzgefässanlage**
Smelting plant comprising a vessel
Installation de fusion comprenant un récipient

(30) Priorität: 15.03.1995 DE 19509285
(43) Veröffentlichungstag der Anmeldung: 18.09.1996
(73) Patentinhaber: SMS SCHLOEMANN-SIEMAG AKTIENGESELLSCHAFT, 40237 Düsseldorf (DE)
(72) Erfinder: Birrenbach, Alfons, Dipl.-Ing., 46149 Oberhausen (DE)
(74) Vertreter: Valentin, Ekkehard, Dipl.-Ing.

(56) Entgegenhaltungen:
- EP-A- 0 049 926
- WO-A-91/18120
- DE-A- 2 726 769
- DE-A- 4 302 285
- DE-B- 1 000 412
- DE-B- 1 288 099
- DE-B- 1 433 424
- DE-C- 22 014

## Beschreibung

Die Erfindung betrifft eine Schmelzgefäßanlage mit Befestigungs-, Lager- und Kippvorrichtungen, wobei das Schmelzgefäß ein Konvertergefäß ist, mit einem Gefäßdurchmesser, der nur dem 0,6 - 0,7-fachen Durchmesser eines Lichtbogenofens entspricht und als Sauerstoffaufblaskonverter oder als Lichtbogenofen betrieben werden kann, mit einer an einer Hub- und Schwenkvorrichtung befestigten Blaslanze sowie mit an einer Elektrodenhalterung befestigten Elektroden, wobei die Blaslanze oder die Elektroden in das Schmelzgefäß absenkbar sind. Eine derartige Anlage ist beschrieben in DE-B-1 000 412.

Für die Stahlerzeugung sind eine Reihe von Vorrichtungen bekannt, die über den klassischen Weg Hochofen - Konverter überwiegend heißes, flüssiges Roheisen im Kombination mit Schrott, Erz, Eisenschwamm u. a. metallischen Einsatzstoffen verarbeiten und Schmelzgefäße, beispielsweise Elektro-Lichtbogenöfen, bei denen überwiegend kalte bzw. vorgewärmte Einsatzstoffe, wie Schrott und Eisenschwamm, zum Einsatz kommen.

Aufblaskonverter und Elektro-Lichtbogenöfen werden überwiegend als Einzelaggregate verwendet und betrieben, wobei sich bei Stahlwerken mit zwei oder drei Konverteranlagen ein Konverter in der Regel in Zustellung oder Reserve befindet.

In den letzten Jahren sind Tandem- bzw. Doppel-Ofenanlagen, insbesondere aus Elektrolichtbogenöfen, entwickelt worden, die wegen der sich verschärfenden Knappheit von Ressourcen an Energie und Einsatzstoffen eine kostengünstige und umweltfreundliche Stahlerzeugung zum Ziel hatten.

Hierzu zählen die bekannten Maßnahmen, beim Betrieb von Elektro-Lichtbogenöfen aus dem Elektroofen abgesaugte, heiße Rauchgase zur Vorwärmung des Chargiergutes, in der Regel Schrott, zu verwenden.

Aus der EP 0 483 322 ist ein Einschmelzaggregat mit zwei nebeneinander angeordneten Schmelzgefäßen bekannt, das mit einer Heizeinrichtung für die Zufuhr von Schmelzenergie mit zwei nebeneinander angeordneten Schmelzöfen ausgerüstet ist, wobei zum Vorheizen von metallischem Einsatzmaterial die beim Schmelzprozeß entstehenden heißen Ofenabgase des einen Schmelzofens über Abgasleitungen in den jeweils anderen Schmelzofen eingeleitet werden und wobei bei jedem Schmelzofen an einer Seite ein Schacht angeordnet ist, in dem die Einsatzmaterialien vorgewärmt werden.

Aus der DE 43 02 285 ist ein Verfahren und Einrichtung zum Betreiben einer Zweiofenanlage bekannt.

In dieser Stahlwerksanlage mit Doppelofeneinrichtung wird einer der beiden Öfen zum Einschmelzen des darin befindlichen Schrottes mit elektrischem Strom versorgt, während der andere Ofen vom Netz getrennt wird. Der vom Stromnetz genommene Ofen wird mit Einsatzmaterialien gefüllt und danach mit einem Deckel verschlossen.

Über eine zwischen beiden Öfen vorgesehene Verbindungsleitung wird das Rauchgas aus dem im Betrieb befindlichen Ofen in den vom Stromnetz getrennten Ofen geleitet.

Aus der bisher unveröffentlichten P 44 45 209.8 ist eine Doppelgefäß-Lichtbogenofenanlage bekannt, bei der flüssiges Roheisen im Lichtbogenofen zusammen mit Eisenschwamm verarbeitet wird.

Bei dieser Doppelofenanlage ist die Verarbeitung von flüssigem Roheisen bis zu einem Anteil von max. 70 % möglich, da in dem Ofengefäß, in dem zuerst der hohe Anteil von Roheisen chargiert wird, zunächst bei gleichzeitiger Zugabe von kaltem Eisenschwamm und Kalk mit Sauerstoff über eine Blaslanze gefrischt wird.

Nach Erzeugung einer Vorschmelze wird die Blaslanze abgeschwenkt und die Stahlerzeugung wird nach Einschwenken der Elektroden als Lichtbogenofenprozeß unter weiterer Zugabe von Eisenschwamm, Kalk und anderen metallischen Einsatzstoffen weitergeführt, bis die erforderliche Quantität und Qualität an Stahl erreicht ist. Beide Ofengefäße sind als Lichtbogenofen-Gefäße mit abschwenkbaren Gefäßdeckeln ausgerüstet.

Nachteilig bei diesen bekannten Doppelofenanlagen ist der große Platzbedarf für die Lichtbogenöfen, verbunden mit einem hohen konstruktiven Aufwand, insbesondere für den Kippantrieb und die Ofenfundamente, ferner eine niedrige Badhöhe in den Schmelzgefäßen, die nur ein langsames Blasen mit Sauerstoff gegenüber einem bekannten Konvertergefäß zulassen.

Die Aufgabe der Erfindung besteht deshalb darin, eine Schmelzgefäßanlage zu schaffen, die als Einzel- oder Doppelanlage ausgeführt werden kann, bei der die Lager- und Kippvorrichtung für das Schmelzgefäß erheblich vereinfacht wird, bei der ein höheres Schmelzbad erreichbar ist, bei der die Sauerstoffblasrate erhöht und eine Endtemperatur und qualitative Zusammensetzung der Schmelze für den direkten Verguß, ohne weitere sekundärmetallurgische Nachbehandlung, beispielsweise in einem elektrisch beheizten Pfannenofen, erreicht werden kann.

Die Lösung der Aufgabe erfolgt durch die kennzeichnenden Merkmale des Hauptanspruches. Die Unteransprüche betreffen eine weitere vorteilhafte Ausgestaltung der Schmelzgefäßanlage.

Das erfindungsgemäße Schmelzgefäß wird als Konvertergefäß ausgeführt und weist einen Durchmesser auf, der nur dem 0,6 - 0,7-fachen Durchmesser eines Lichtbogenofens entspricht und als Sauerstoffaufblaskonverter über eine Blaslanze und als Lichtbogenofen mittels Elektroden betrieben wird.

Die Höhe der Schmelze entspricht innerhalb der Ausmauerung nach Neuzustellung der 1,5 - 1,8-fachen Schmelzbadhöhe eines Lichtbogenofens.

Das Schmelzgefäß wird vorzugsweise kugelförmig ausgeführt, das jeweils dreh- bzw. kippbar in einem inneren und äußeren Laufring beweglich gelagert ist, das in die Stahlkonstruktion eines Stahlwerksgebäudes integriert wird und für die keine gefäßspezifischen Fundamentanlagen erforderlich sind. Die Rollbahnen für die Laufringe können jeweils auch als Gleisanlagen mit eigenen Streifenfundamenten ausgeführt werden.

Das Schmelzgefäß mit dem inneren und äußeren Laufring ist auf jeweils zwei Fahrschienen, die in einer Arbeitsbühne angeordnet sind, drehbar gelagert. Die Aufhängung des Schmelzgefäßes in dem inneren Laufring ist derart gestaltet, daß der Schwerpunkt unter dem Mittelpunkt der Doppelringe liegt. Nach dem Stahlabstich bzw. dem Abschlacken kann sich das Gefäß selbständig wieder aufrichten.

Das Schmelzgefäß wird durch ein Doppelseil, das über eine Windenanlage mit dem äußeren Laufring umschlungen ist, auf den Fahrschienen bewegt, wobei die Zugseile in Nuten des äußeren Laufringes geführt werden.

Im Bereich der Fahrschienen ist auf einer Seite der Schmelzgefäße eine doppelseitige Seilwinde, an der gegenüberliegenden Seite sind entsprechende mit Spannvorrichtungen versehene Umlenkrollen angeordnet. Durch den Seilantrieb kann das Schmelzgefäß in jede beliebige Arbeitsposition gebracht, es kann sowohl in die Chargier- und Abstichposition für Stahl, in die Abschlackposition beim Ausleeren der Restschlacke als auch bei Ausbruch- und Zustellarbeiten der feuerfesten Ausmauerung auf den Kopf gestellt werden.

In den äußeren Laufring ist eine zweite Nute eingearbeitet, die über den Schienenkopf der Fahrschiene abläuft. Die Verbindung von Laufringnute und Schienenkopf ist erforderlich, um ein Schräglauf des Schmelzgefäßes während des Kipp- bzw. Ablaufvorganges zu vermeiden.

Das Schmelzgefäß wird jeweils durch einen Gefäßdeckel mit einer aufgesetzten und gekühlten Absaughaube abgedeckt. Der Deckel wird durch ein Hubwerk abgehoben bzw. aufgelegt.

Das Mittelteil der wassergekühlten Absaughaube wird je nach Betriebsweise mit einem Zusatzdeckel für die Elektroden bzw. für eine Blaslanze verschlossen.

Bei nebeneinander angeordneten Schmelzgefäßen ist jeweils nur eine Elektrodenvorrichtung bzw. Lanzenanlage vorgesehen.

Die Elektrodenvorrichtung wird durch eine Drehbühne in die jeweilige Arbeits- bzw. Parkposition gedreht. Die Säulenführung wird unterhalb und die Elektroden-, Hub- und Senkvorrichtung wird auf einer Drehbühne angeordnet.

Die Blaslanze ist auf einem um eine Säule geführten Lanzenschlitten mit einem starren Ausleger eingespannt. Die Hub- und Senkvorrichtung wird durch einen in einer Winde eingespanntes endlosen Seilzug bewegt. Die Blaslanze wird als Mehrdüsenlanze mit Wasserkühlung aufgeführt. Die Zusatzdeckel werden durch einen um eine Elektroden- bzw. Lanzensäule geführten Ausleger-Hubwagen angehoben oder abgesenkt.

Die Schmelzgefäßanlage kann sowohl mit einem als auch mit zwei Schmelzgefäßen betrieben werden.

Die Anlage ist so konzipiert, daß sowohl mit einer Blaslanze als auch mit Elektroden gearbeitet werden kann. Entsprechend dem aus der bisher unveröffentlichten P 44 45 209.8 bekannten Verfahren kann hier jedoch flüssiges Roheisen bis zu einem Anteil von 85 % oder auch höher eingesetzt werden, wenn die erforderlichen Kühlmittel - Eisenschwamm, Schrott, Erz u. a. metallische Einsatzstoffe - zugegeben werden.

Bei Anwendung dieses Verfahrens wird bei dem ersten Verfahrensschritt mit einer Blaslanze Sauerstoff zugeführt, bei dem zweiten Verfahrensschritt wird mit den Elektroden gearbeitet und weitere metallische Einsatzstoffe und Zuschläge für die metallurgische Arbeit und zur Erreichung der erforderlichen Endtemperatur der Schmelze für den direkten Verguß, beispielsweise in einer Stranggießanlage, zugegeben. Auf den Einsatz eines zusätzlichen, elektrisch beheizten Pfannenofens zur weiteren sekundärmetallurgischen Arbeit und zur Erzielung bzw. zum Halten der erforderlichen Gießtemperatur kann hier verzichtet werden.

Die Zugabe von flüssigen, metallischen Einsatzstoffen erfolgt vor Blasbeginn mit Sauerstoff. Die Zugabe von festen metallischen Einsatzstoffen erfolgt über Rutschen oder Schurren durch die Mündung des Schmelzgefäßes vor oder während des Sauerstoffblasens bzw. während der Arbeit mit den Elektroden.

Die Zuschlagstoffe für die metallurgische Arbeit und zur Schlackenbildung werden in bekannter Weise stückig oder staubförmig zugegeben.

Die Schmelzgefäße werden mit feuerfestem Material, einem Dauer- und Verschleißfutter zugestellt. In die Wand des Schmelzgefäßes können seitlich zusätzliche Öffnungen für den Stahl- bzw. Schlackenabstich vorgesehen werden, der Boden kann als geschlossener bzw. abnehmbarer Boden ausgeführt werden.

Die Schmelzgefäße können in bekannter Weise so umgerüstet werden, daß jederzeit direkt durch den Boden oder seitlich oberhalb des Bodens Spülgase in die Schmelze eingeblasen werden können.

Ein Ausführungsbeispiel wird anhand von schematischen Zeichnungen näher erläutert.

Es zeigen:
- Fig. 1: einen Schnitt durch die in einer Stützkonstruktion angeordnete Schmelzgefäßanlage,
- Fig. 2: eine Draufsicht auf eine Doppelgefäß-Schmelzanlage,
- Fig. 3: einen Schnitt durch ein Schmelzgefäß,
- Fig. 4: einen Schnitt durch ein Schmelzgefäß in verschiedenen Betriebspositonen mit Seilantrieb,
- Fig. 5: eine Draufsicht auf den Seilantrieb,
- Fig. 6: eine Seitenansicht der Laufringe,
- Fig. 7: einen Schnitt durch die Laufringe,
- Fig. 8: einen Schnitt durch die Fahrschiene.

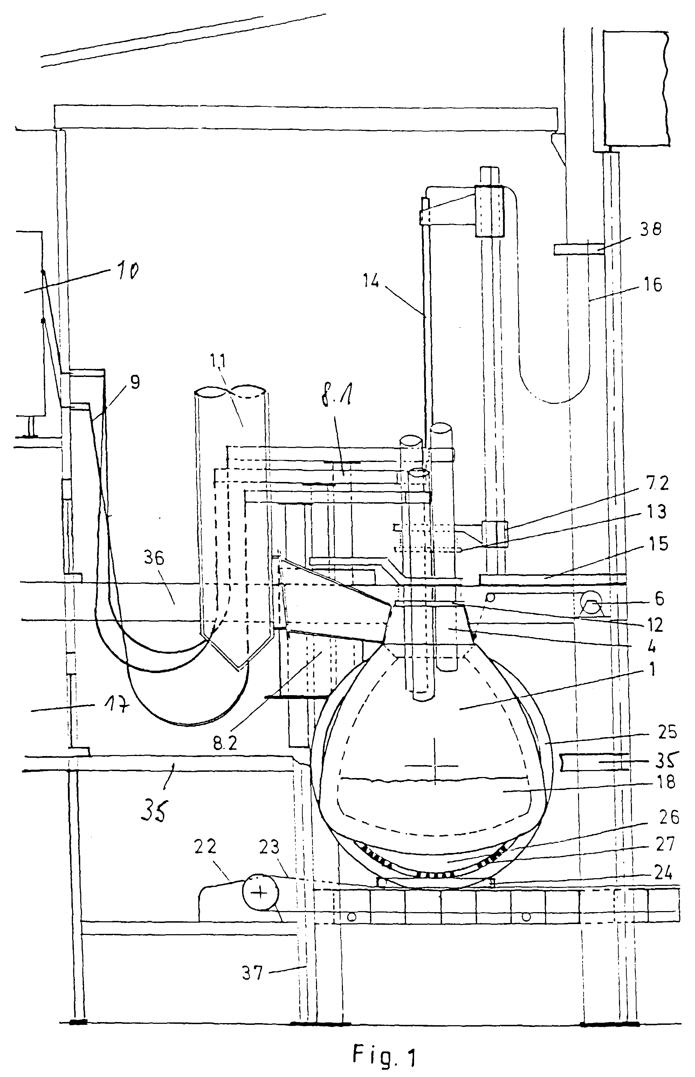

Fig. 1 zeigt einen Schnitt durch das in einer Stützkonstruktion (37), zwischen Arbeitsbühnen (35, 36) und auf der Fahrschiene (29) kippbar angeordnete Schmelzgefäß (1), das in einem inneren (26) und äußeren Laufring (25) verlagert ist.

Eine Seilwinde (22) mit Zugseilen (23) ermöglicht die Kippbewegungen des Schmelzgefäßes (1) mit einer Schmelze (18) in Richtung Stahlabstich bzw. Schlackenabstich.

Paarig angeordnete Einzelfundamente für das Schmelzgefäß (1) bzw. für die Schmelzgefäße sind nicht erforderlich, da die Lasten über die Fahrschienen (29) direkt in die Stahlkonstruktion (37) bzw. in die Stützenfundamente übertragen werden.

Oberhalb des Schmelzgefäßes (1) ist ein an einem Deckel-Hubwerk (6) aufgehängter Gefäßdeckel (4) mit einer gekühlten Abgas-Sammelhaube und Stutzen installiert, der Anschluß an die Abgasleitung (11) hat.

Die Elektrodenhalterung (8.2) ist auf einer Drehbühne, die auf der Deckelbühne (36) verlagert ist, montiert, wobei die Säulenführung unterhalb der Bühne (36) und die Hub-Senk-Antriebe auf der Bühne (36) angeordnet sind. Die Elektrodensäulen werden durch die Bühne (36) geführt. Die Elektrodenarme für die Elektroden (3) sind auf den Säulen befestigt. Mit den Hochstromkabeln (9) wird eine stromleitende Verbindung zu dem Transformator (10) geschaffen.

Eine Sauerstoffblaslanze (14) mit Medienzuführung (16) ist an einer Hub- und Schwenkvorrichtung (15) auf einer Lanzenbühne (38) angeordnet. Oberhalb der Stahlkonstruktion (37) sind Kranbahnträger für den Hallenkran, in Höhe der Arbeitsbühne (35) ist ein Leitstand (17) angeordnet.

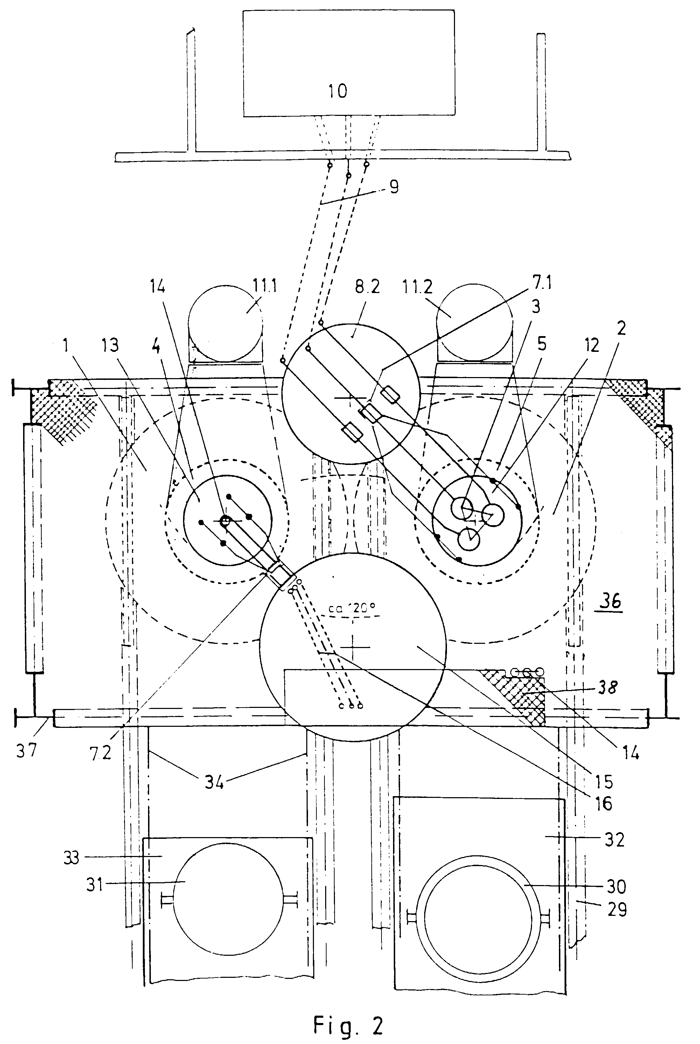

Fig 2 zeigt eine achsparallele Anordnung von zwei Schmelzgefäßen (1, 2), bei der eine schwenkbare Elektrodenhalterung (8.2) mit der Stromzuführung (9) vom Transformator (10) für die Elektroden (3) in Richtung Transformatorgebäude und eine Hub- und Schwenkvorrichtung (15) für die Blaslanze (14) und den Zusatzdeckel (13) achsparallel zwischen den Schmelzgefäßen (1, 2) in Richtung der Transportwagen (32, 33) vorgesehen ist.

Die Hub- und Schwenkvorrichtung (15) der Lanzenanlage ist auf der Deckelbühne (36) installiert. Sie besteht im wesentlichen aus der Drehbühne mit der aufgesetzten Führungssäule, dem Lanzenantrieb sowie dem Lanzenschlitten mit Ausleger- und Klemmvorrichtung für die Blaslanze. Ein zusätzliches Hubwerk (7.2) ist für den Zusatzdeckel (13) an der Hub- und Schwenkvorrichtung (15) der Lanzenanlage vorgesehen.

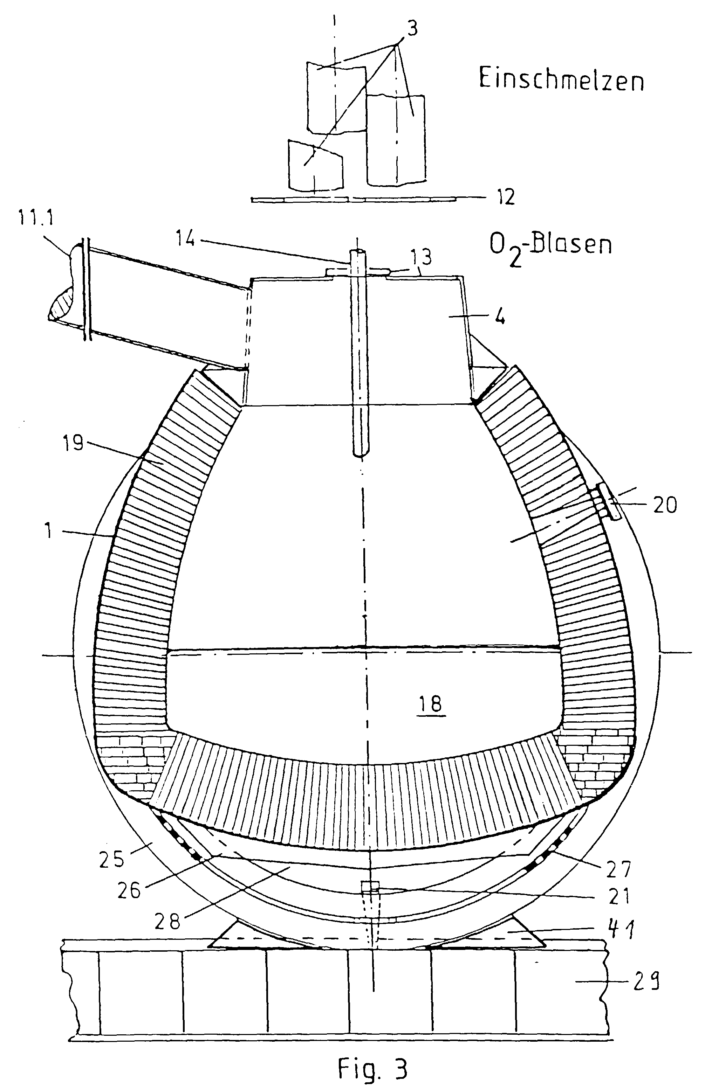

Fig. 3 zeigt einen Schnitt durch das mit einer Ausmauerung (19) versehene Schmelzgefäß (1) mit aufgesetztem Gefäßdeckel (4), Zusatzdeckel (13) und eingefahrener Blaslanze (14). Anstelle der Blaslanze (14) und dem Zusatzdeckel (13) können Elektroden (3) mit einem Zusatzdeckel (12) auf den Gefäßdeckel (4) aufgesetzt werden.

Das Schmelzgefäß (1) ist in einem inneren Ring (26) gelagert und durch am Umfang angeordnete Tragelemente (28) an diesem befestigt. Mittels Rollsegmenten (27) gleitet der innere Ring (26) in dem äußeren Ring (25). Die Arretierung der beiden Ringe (25) und (26) erfolgt durch automatisch betätigte Scherkeile (21). Das Schmelzgefäß (1) wird über den äußeren Laufring (25) mittels Seilzug auf der Fahrschiene (29) bewegt. In Arbeitsstellung wird der äußere Laufring (25) durch eine Arretierung (41) gesichert.

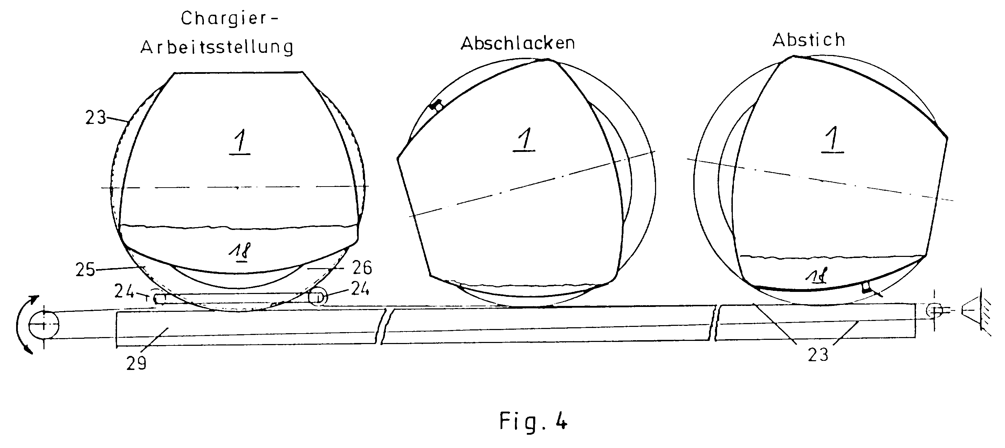

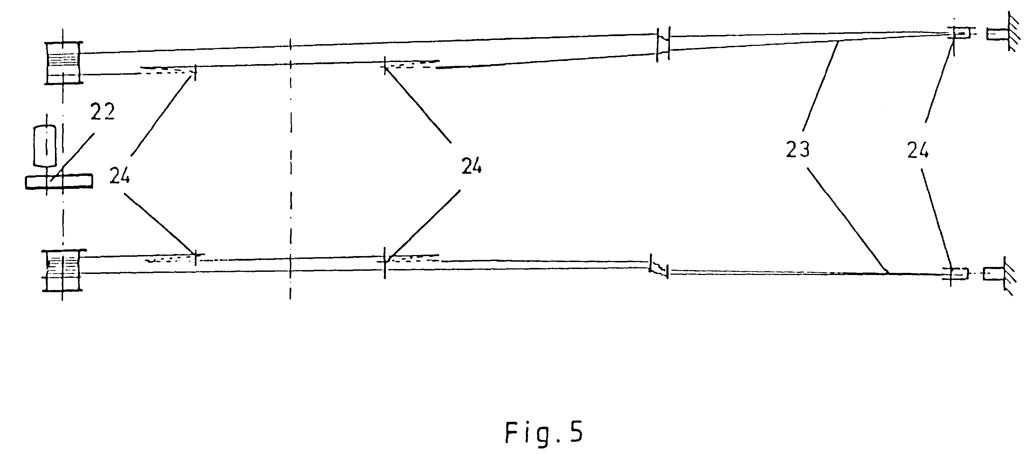

Die Kippbewegung und das Verfahren des Schmelzgefäßes (1) auf der Fahrschiene (29) in die verschiedenen Positionen - Chargieren, Abschlacken, Abstich und danach wieder Blas- bzw. Arbeitsstellung - erfolgt, wie in den Fig. 4 und 5 dargestellt, durch eine Seilwinde (22) mit zwei durchgehenden Zugseilen (23), die jeweils in einer Nut um den äußeren Ring (26) und über gefederte Umlenkrollen (24), die für eine erforderliche Spannung der Zugseile (23) sorgen, geführt werden.

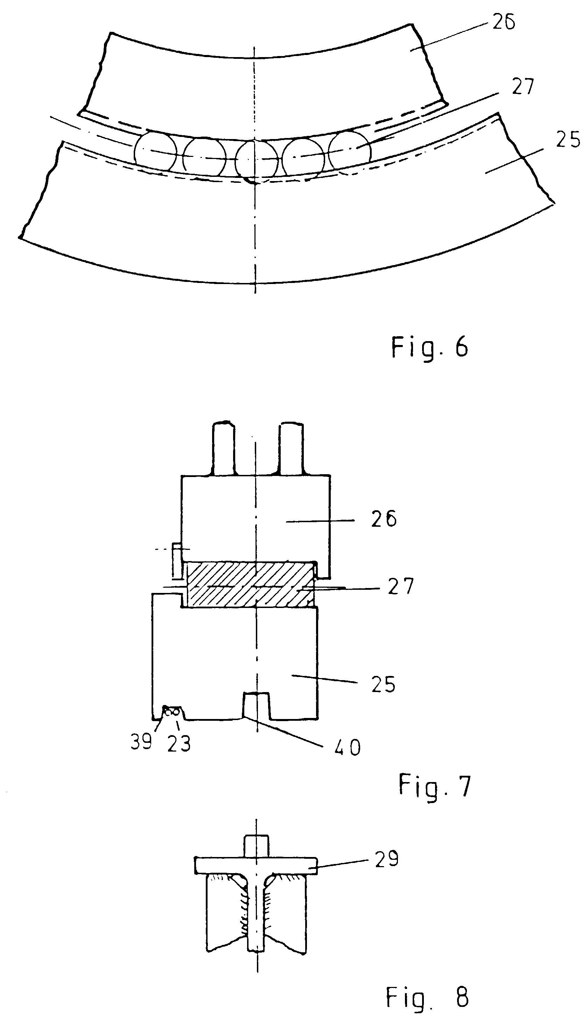

Fig. 6 zeigt einen Abschnitt des inneren (26) und äußeren (25) Laufringes, die gegeneinander in Rollensegmenten (27) gelagert sind.

In einem Schnitt gemäß Fig. 7 sind der innere (26) und äußere (25) Laufring sowie eine Laufrolle der Rollensegmente (27) dargestellt.

In dem äußeren Laufring (26) sind eine Nut (39) für das Zugseil (23) und eine Spurrille (40) für die in Fig. 8 dargestellte Fahrschiene (29) eingearbeitet.

Der Kopf der Fahrschiene (29) ist als quadratischer Längsstab ausgebildet und auf einem Doppel-T-Träger mit entsprechenden Versteifungen befestigt.

### Bezugsziffernliste:

- 1: Schmelzgefäß I
- 2: Schmelzgefäß II
- 3: Elektroden
- 4: Gefäßdeckel I mit Absaughaube
- 5: Gefäßdeckel II mit Absaughaube
- 6: Gefäßdeckel-Hubwerk I
- 7.1: Hubwerk für 13
- 7.2: Hubwerk für 13
- 8.1: Elektrodenhalterung stationär
- 8.2: Elektrodenhalterung schwenkbar
- 9: Stromzuführung
- 10: Transformator
- 11.1: Abgasleitung Schmelzgefäß I
- 11.2: Abgasleitung Schmelzgefäß II
- 12: Zusatzdeckel "Elektroden"
- 13: Zusatzdeckel "Blaslanze"
- 14: Blaslanze
- 15: Hub- und Schwenkvorrichtung für 14
- 16: Medienzuführung für 14
- 17: Leitstand
- 18: Schmelze
- 19: Ausmauerung
- 20: Abstichstutzen
- 21: Scherkeil
- 22: Seilwinde
- 23: Zugseile
- 24: Umlenkrolle mit Rückfederung
- 25: Äußerer Laufring
- 26: Innerer Laufring
- 27: Rollensegment
- 28: Tragelement
- 29: Fahrschiene von 25
- 30: Stahlgießpfanne
- 31: Schlackenkübel
- 32: Stahlentnahmewagen
- 33: Schlackenkübel-Transportwagen
- 34: Schienen
- 35: Arbeitsbühne
- 36: Deckelbühne
- 37: Stahlkonstruktion
- 38: Lanzenbühne
- 39: Nut in 25
- 40: Spurrille in 25
- 41: Arretierung

## Patentansprüche

1. Schmelzgefäßanlage mit Befestigungs-, Lager und Kippvorrichtungen, wobei das Schmelzgefäß ein Konvertergefäß (1) ist, mit einem Gefäßdurchmesser, der nur dem 0,6 - 0,7-fachem Durchmesser eines Lichtbogenofens entspricht und als Sauerstoffaufblaskonverter oder als Lichtbogenofen betrieben werden kann, mit einer an einer Hub- und Schwenkvorrichtung (15) befestigten Blaslanze (14) sowie mit an einer Elektrodenhalterung (8.1) befestigten Elektroden (3), wobei die Blaslanze (14) oder die Elektroden (3) in das Schmelzgefäß (1) absenkbar sind,
dadurch gekennzeichnet,
- daß das Schmelzgefäß (1) mit am Umfang angeordneten Tragelementen (28) an inneren Laufringen (26) lösbar befestigt ist, daß jeder der inneren Laufringe (26) mittels Rollensegmenten (27) in einem äußeren Laufring (25) beweglich gelagert ist,
- daß der innere Laufring (26) und der äußere Laufring (25) durch mindestens einen Scherkeil (21) lösbar gegeneinander befestigt sind,
- daß jeder der äußeren Laufringe (25) in einer Spurrille (40) auf Fahrschienen (29) abrollt und
- daß die äußeren Laufringe (25) durch ein in einer Seilnut (39) geführtes Zugseil (23) über eine Seilwinde (22) mit Umlenkrollen (24) verfahrbar angeordnet sind und
- daß die Höhe der Schmelze (18) innerhalb der Ausmauerung (19) der 1,5 - 1,8-fachen Schmelzbadhöhe eines Lichtbogenofens entspricht.

2. Schmelzgefäß nach Anspruch 1,
dadurch gekennzeichnet,
daß das Schmelzgefäß (1) in vertikaler Stellung durch eine Arretierung (41) fixiert ist.

3. Schmelzgefäß nach Anspruch 1 und 2,
dadurch gekennzeichnet,
daß eine Hub- und Schwenkvorrichtung (15) für die Blaslanze (14) und eine stationäre Elektrodenhalterung (8.1) mit Stromzuführung (9) für die Elektroden (3) oberhalb des Schmelzgefäßes (1) angeordnet sind.

4. Schmelzgefäß nach den Ansprüchen 1 und 2,
dadurch gekennzeichnet,
daß ein als Absaughaube ausgebildeter Gefäßdeckel (4) mittels eines Deckelhubwerkes (6) auf das Schmelzgefäß (1) absetzbar bzw. von dem Schmelzgefäß (1) entfernbar ist.

5. Schmelzgefäß nach den Ansprüchen 1 - 6,
dadurch gekennzeichnet,
daß ein Hubwerk (7.1) einen Zusatzdeckel (12) für Elektroden (3) oder ein Hubwerk (7.2) einen Zusatzdeckel (13) für eine Blaslanze auf den Gefäßdeckel (4) absenkt.

6. Schmelzgefäß nach Anspruch 1 oder 3,
dadurch gekennzeichnet,
daß die Blaslanze (14) als Mehrfachlanze ausgebildet ist.

7. Schmelzgefäß nach den Ansprüchen 1 - 6,
dadurch gekennzeichnet,
daß der Gefäßdeckel (4) mit Abgasstutzen, die Elektrodenhalterung (8.1), die Abgasleitungen (11), die Zusatzdeckel (12, 13) und die Blaslanze (14) wassergekühlt sind.

8. Schmelzgefäß nach Anspruch 1,
dadurch gekennzeichnet,
daß zwei Schmelzgefäße (1, 2) achsparallel nebeneinander angeordnet sind.

9. Schmelzgefäß nach Anspruch 8,
dadurch gekennzeichnet,
daß die auf einer Schwenkbühne angeordnete Elektrodenhalterung (8.2) mit Elektroden (3) und Stromzuführungen (9) auf Schmelzgefäß (1) oder Schmelzgefäß (2) schwenkbar ist.

10. Schmelzgefäß nach Anspruch 8,
dadurch gekennzeichnet,
daß eine Hub- und Schwenkvorrichtung (15) mit einer Blaslanze (14) und einem Zusatzdeckel-Hubwerk auf der Deckelbühne (36) achsparallel gegenüber einer schwenkbaren Elektrodenhalterung (8.2) angeordnet ist.

## Claims

1. Melting crucible plant with fastening, mounting and tipping devices, wherein the melting crucible is a converter crucible (1) with a crucible diameter which corresponds with only 0.6 to 0.7 times the diameter of an arc furnace and can be operated as an oxygen inflation converter or as an arc furnace, with a blower lance (14) fastened to a lifting and pivoting device (15) as well as with electrodes (3) fastened to an electrode holder (8.1), wherein the blower lance (14) or the electrodes (3) are lowerable into the melting crucible,
characterised in that
- the melting crucible (1) is detachably fastened to inner guide rings (26) by support elements (28) arranged at the circumference,
- each of the inner guide rings (26) is movably mounted in an outer guide ring (25) by means of roller segments (27),
- the inner guide ring (26) and the outer guide ring (25) are detachably fastened relative to one another by at least one shear key (21),
- each of the outer guide rings (25) rolls in a track groove (40) on guide rails (29) and
- the outer guide rings (25) are arranged to be movable by a traction cable (23), which is guided in a cable groove (39), by way of a cable winch (22) with deflecting rollers (24) and
- the height of the melt (18) within the brick lining (19) corresponds to 1.5 to 1.8 times the melt bath height of an arc furnace.

2. Melting crucible according to claim 1, characterised in that the melting crucible (1) is fixed in vertical setting by a locking device (41).

3. Melting crucible according to claims 1 and 2, characterised in that a lifting and pivoting device (15) for the blower lance (14) and a stationery electrode holder (8.1) with current feed (9) for the electrodes (3) are arranged above the melting crucible (1).

4. Melting crucible according to claims 1 and 2, characterised in that a crucible cover constructed as an evacuation hood can be set down on the melting crucible (1), or removed from the melting crucible (1), by means of a cover lifting mechanism (6).

5. Melting crucible according to claims 1 to 6, characterised in that a lifting mechanism (7.1) lowers an auxiliary cover (12) for electrodes (3) onto the crucible cover (4) or a lifting mechanism (7.2) lowers an auxiliary cover (13) for a blower lance onto the crucible cover (4).

6. Melting crucible according to claims 1 to 3, characterised in that the blower lance (14) is formed as a multiple lance.

7. Melting crucible according to claim 1 to 6, characterised in that the crucible cover (4) together with exhaust gas stub pipes, the electrode holder (8.1), the exhaust gas ducts (11), the auxiliary covers (12, 13) and the blower lance (14) are water-cooled.

8. Melting crucible according to claim 1, characterised in that two melting crucibles (1, 2) are arranged axially parallel and adjacent to one another.

9. Melting crucible according to claim 8, characterised in that the electrode holder (8.2), which is arranged on a swivel stage, together with electrodes (3) and current feeds (9) is pivotable on the melting crucible (1) or melting crucible (2).

10. Melting crucible according to claim 8, characterised in that a lifting and pivoting device (15) together with a blower lance (14) and an auxiliary cover lifting mechanism is arranged on the cover stage (36) axially parallel relative to a pivotable electrode holder (8.2).

## Revendications

1. Installation de fusion comprenant un récipient, présentant des dispositifs de fixation, de positionnement et de basculement, le récipient étant un récipient convertisseur (1) présentant un diamètre qui ne correspond qu'à 0,6 à 0,6 fois le diamètre d'un four à arc et pouvant fonctionner comme convertisseur à oxygène ou comme four à arc, présentant une lance de soufflage (14) fixée sur un dispositif d'élévation et de pivotement (15) ainsi que des électrodes (3) fixées sur un dispositif de fixation (8.1), la lance de soufflage (14) ou les électrodes (3) pouvant être abaissées dans le récipient de fusion (1),
caractérisée
- en ce que le récipient de fusion (1) est fixé de manière amovible aux bagues de roulement (26) internes à l'aide d'éléments de support (28) disposés sur le périmètre,
- en ce que chacune des bagues de roulement (26) internes est logée de manière à pouvoir bouger dans une bague de roulement externe (25) à l'aide de segments à rouleaux (27),
- en ce que la bague de roulement interne (26) et la bague de roulement externe (25) sont fixées de manière amovible l'une par rapport à l'autre à l'aide d'au moins une clavette de cisaillement (21),
- en ce que chacune des bagues de roulement externes (25) roule dans une ornière de passage (40) sur des rails (29) et
- en ce que les bagues de roulement externes (25) sont disposées de manière à pouvoir être déplacées à l'aide d'un câble de traction (23) guidée dans une rainure (39) via un treuil (22) avec des poulies de déviation (24) et
- en ce que la hauteur du bain de fusion (18) dans le garnissage (19) du four correspond à 1,5 à 1,8 fois la hauteur du bain de fusion d'un four à arc.

2. Récipient de fusion selon la revendication 1, caractérisé en ce que le récipient de fusion (1) est fixé dans une position verticale par un dispositif de blocage (41).

3. Récipient de fusion selon la revendication 1 et 2, caractérisé en ce qu'on a disposé un dispositif d'élévation et de pivotement (15) pour la lance de soufflage (14) et un dispositif de fixation (8.1) stationnaire pour les électrodes avec une alimentation en courant (9) pour les électrodes (3) au-dessus du récipient de fusion (1).

4. Récipient de fusion selon les revendications 1 et 2, caractérisé en ce qu'un couvercle (4) de récipient exécuté sous forme d'une hotte d'aspiration peut être placé sur le récipient de fusion (1) ou enlevé du récipient de fusion (1) à l'aide d'un appareil d'élévation (6) de couvercle.

5. Récipient de fusion selon les revendications 1 à 4, caractérisé en ce qu'un appareil d'élévation (7.1) abaisse un couvercle supplémentaire (12) pour les électrodes ou en ce qu'un appareil d'élévation (7.2) abaisse un couvercle supplémentaire (13) pour une lance de soufflage sur le couvercle (4) du récipient.

6. Récipient de fusion selon la revendication 1 ou 3, caractérisé en ce que la lance de soufflage (14) est exécutée sous forme d'une lance multiple.

7. Récipient de fusion selon une quelconque des revendications 1 à 6, caractérisé en ce que le couvercle de récipient (4) avec des tubulures pour les gaz résiduaires, le dispositif de fixation des électrodes (8.1), les conduites des gaz résiduaires (11), les couvercles supplémentaires (12, 13) et la lance de soufflage (14) sont refroidis à l'eau.

8. Récipient de fusion selon la revendication 1, caractérisé en ce qu'on a disposé deux récipients de fusion (1, 2) l'un à côté de l'autre, avec leurs axes parallèles.

9. Récipient de fusion selon la revendication 8, caractérisé en ce que le dispositif de fixation des électrodes (8.2) disposé sur un portique pivotant avec les électrodes (3) et les alimentations de courant (9) peut être pivoté sur le récipient de fusion (1) ou le récipient de fusion (2).

10. Récipient de fusion selon la revendication 8, caractérisé en ce qu'un dispositif d'élévation et de pivotement (15), avec une lance de soufflage (14) et l'appareil d'élévation du couvercle supplémentaire est disposé sur le portique (36) de couvercle avec un axe parallèle par rapport à un dispositif de fixation d'électrodes (8.2) pouvant être pivoté.
